# EUROPEAN PATENT APPLICATION

(11) **EP 4 503 745 A1**
(43) Date of publication of application: **05.02.2025**
(21) Application number: 23778175.2
(22) Date of filing: 28.03.2023
(51) Int. Cl.: H04W 40/02

(54) **UE ROUTE SELECTION POLICY (URSP) DETERMINATION METHOD, USER EQUIPMENT, AND NETWORK-SIDE DEVICE**

(30) Priority: 28.03.2022 CN 202210330333
(71) Applicant: VIVO MOBILE COMMUNICATION CO., LTD., Dongguan, Guangdong 523863 (CN)
(72) Inventor: WANG, Wen, Dongguan, Guangdong 523863 (CN); LV, Huazhang, Dongguan, Guangdong 523863 (CN); KE, Xiaowan, Dongguan, Guangdong 523863 (CN)
(74) Representative: Shieldmark
(86) International application number: PCT/CN2023/084312
(87) International publication number: WO 2023/185810

(57) **Abstract**

This application relates to the field of communication technologies, and discloses a user equipment route selection policy URSP determining method, a user equipment, and a network side device. The user equipment route selection policy URSP determining method in embodiments of this application includes the following steps: A user equipment obtains at least one first URSP. Each first URSP includes first indication information, or each first URSP includes a correspondence between the first URSP and the first indication information. The user equipment determines a target URSP from the at least one first URSP based on the first indication information or the correspondence.

## Description

### CROSS-REFERENCE TO RELATED APPLICATION

This application claims priority to Chinese Patent Application No. 202210330333.5, filed on March 28, 2022 and entitled "USER EQUIPMENT ROUTE SELECTION POLICY URSP DETERMINING METHOD, USER EQUIPMENT, AND NETWORK SIDE DEVICE", which is incorporated herein by reference in its entirety.

### TECHNICAL FIELD

This application relates to the field of communication technologies, and in particular, to a user equipment route selection policy URSP determining method, a user equipment, and a network side device.

### BACKGROUND

Generation and updating of a user equipment route selection policy (UE Route Selection Policy, URSP) of a user equipment are completed by a home network of the user equipment. In a roaming scenario, a URSP provided by a home public land mobile network (Home Public Land Mobile Network, HPLMN) for a user equipment is valid for a visited PLMN (Visited PLMN, VPLMN) of each user equipment having a roaming protocol with the HPLMN. In other words, the HPLMN may have generated a universal URSP for all VPLMNs based on roaming protocols of all of the VPLMNs. The URSP does not vary for each VPLMN.

The user equipment performs URSP evaluation based on URSP precedences. The HPLMN configures the following URSP list for the user equipment (in descending order of precedences): a URSP#1, a URSP#2, and a URSP#3. For some applications, when the user equipment is in a VPLMN#2, the URSP#1 matches the user equipment according to the above precedences. However, actually, when the user equipment is in the VPLMN#2, the user equipment may match the URSP#2 more. Therefore, for a person skilled in the art, how to determine a URSP more matching a network in which a user equipment is located is a technical problem that needs to be resolved urgently.

### SUMMARY

Embodiments of this application provide a user equipment route selection policy URSP determining method, a user equipment, and a network side device, which can resolve a problem of how to determine a URSP more matching a network in which a user equipment is located.

According to a first aspect, a user equipment route selection policy URSP determining method is provided. The method includes the following steps:

A user equipment obtains at least one first URSP. Each first URSP includes first indication information, or each first URSP includes a correspondence between the first URSP and the first indication information.

The user equipment determines a target URSP from the at least one first URSP based on the first indication information or the correspondence.

According to a second aspect, a user equipment route selection policy URSP determining method is provided. The method includes the following steps:

A first network side device generates a first URSP. Each first URSP includes first indication information, or each first URSP includes a correspondence between the first URSP and the first indication information, and the first indication information is used for indicating a USRP.

The first network side device transmits the first URSP to a user equipment.

According to a third aspect, a user equipment route selection policy URSP determining method is provided. The method includes the following steps:

A second network side device transmits URSP association generation information to a first network side device. The URSP association generation information is used for the first network side device to generate a first URSP. The first URSP includes first indication information, or includes a correspondence between the first URSP and the first indication information, and the first indication information is used for indicating a USRP.

According to a fourth aspect, a URSP determining apparatus is provided. The apparatus includes:
an obtaining module, configured to obtain at least one first URSP, where each first URSP includes first indication information, or each first URSP includes a correspondence between the first URSP and the first indication information; and
a processing module, configured to determine a target URSP from the at least one first URSP based on the first indication information or the correspondence.

According to a fifth aspect, a URSP determining apparatus is provided. The apparatus includes:
an obtaining module, configured to obtain at least one first URSP, where each first URSP includes first indication information, or each first URSP includes a correspondence between the first URSP and the first indication information; and
a processing module, configured to determine a target URSP from the at least one first URSP based on the first indication information or the correspondence.

According to a sixth aspect, a URSP determining apparatus is provided. The apparatus includes:
a transmitting module, configured to send URSP association generation information to a first network side device. The URSP association generation information is used for the first network side device to generate a first URSP. The first URSP includes first indication information, or includes a correspondence between the first URSP and the first indication information, and the first indication information is used for indicating a USRP.

According to a sixth aspect, a user equipment is provided. The user equipment includes a processor and a memory. The memory stores a program or instructions executable in the processor. The program or the instructions, when executed by the processor, implement the steps of the method described in the first aspect.

According to an eighth aspect, a user equipment is provided. The user equipment includes a processor and a communication interface. The processor is configured to: obtain at least one first URSP, where each first URSP includes first indication information, or each first URSP includes a correspondence between the first URSP and the first indication information; and determine a target URSP from the at least one first URSP based on the first indication information or the correspondence.

According to a ninth aspect, a first network side device is provided. The network side device includes a processor and a memory. The memory stores a program or instructions executable in the processor. The program or the instructions, when executed by the processor, implement the steps of the method described in the second aspect.

According to a tenth aspect, a first network side device is provided. The first network side device includes a processor and a communication interface. The processor is configured to generate a first URSP. Each first URSP includes first indication information, or each first URSP includes a correspondence between the first URSP and the first indication information, and the first indication information is used for indicating a USRP. The communication interface is configured to transmit the first URSP to a user equipment.

According to an eleventh aspect, a second network side device is provided. The network side device includes a processor and a memory. The memory stores a program or instructions executable in the processor. The program or the instructions, when executed by the processor, implement the steps of the method described in the third aspect.

According to a twelfth aspect, a first network side device is provided. The second network side device includes a processor and a communication interface. The communication interface is configured to transmit URSP association generation information to a first network side device. The URSP association generation information is used for the first network side device to generate a first URSP. The first URSP includes first indication information, or includes a correspondence between the first URSP and the first indication information, and the first indication information is used for indicating a USRP.

According to a thirteenth aspect, a communication system is provided. The system includes a user equipment, a first network side device, and a second network side device. The user equipment may be configured to perform the steps of the URSP determining method described in the first aspect, the first network side device may be configured to perform the steps of the URSP determining method described in the second aspect, and the second network side device may be configured to perform the steps of the URSP determining method described in the second aspect.

According to a fourteenth aspect, a readable storage medium is provided. The readable storage medium stores a program or instructions. The program or the instructions, when executed by a processor, implement the steps of the method described in the first aspect, the method described in the second aspect, or the method described in the third aspect.

According to a fifteenth aspect, a chip is provided. The chip includes a processor and a communication interface. The communication interface is coupled to the processor. The processor is configured to execute a program or instructions to implement the method described in the first aspect, the method described in the second aspect, or the method described in the third aspect.

According to a sixteenth aspect, a computer program/program product is provided. The computer program/program product is stored in a storage medium. The computer program/program product is executed by at least one processor, to implement the steps of the URSP determining method described in the first aspect, the second aspect, or the third aspect.

In embodiments of this application, the first URSP includes the first indication information, or each first URSP includes the correspondence between the first URSP and the first indication information. Since the URSP is extended, the user equipment can select the target URSP from one or more URSPs for a current application based on the first indication information included in the first URSP or the correspondence between the target URSP and the first indication information, so that complexity is relatively low, and the application of the user equipment can use the URSP matching the application, so that performance of the user equipment is optimized.

### BRIEF DESCRIPTION OF THE DRAWINGS

Embodiments of this application provide a user equipment route selection policy URSP determining method, a user equipment, and a network side device, which can resolve a problem of how to determine a URSP more matching a network in which a user equipment is located.

According to a first aspect, a user equipment route selection policy URSP determining method is provided. The method includes the following steps:

A user equipment obtains at least one first URSP. Each first URSP includes first indication information, or each first URSP includes a correspondence between the first URSP and the first indication information.

The user equipment determines a target URSP from the at least one first URSP based on the first indication information or the correspondence.

According to a second aspect, a user equipment route selection policy URSP determining method is provided. The method includes the following steps:

A first network side device generates a first URSP. Each first URSP includes first indication information, or each first URSP includes a correspondence between the first URSP and the first indication information, and the first indication information is used for indicating a USRP.

The first network side device sends the first URSP to a user equipment.

According to a third aspect, a user equipment route selection policy URSP determining method is provided. The method includes the following steps:

A second network side device sends URSP association generation information to a first network side device. The URSP association generation information is used for the first network side device to generate a first URSP. The first URSP includes first indication information, or includes a correspondence between the first URSP and the first indication information, and the first indication information is used for indicating a USRP.

According to a fourth aspect, a URSP determining apparatus is provided. The apparatus includes:
an obtaining module, configured to obtain at least one first URSP, where each first URSP includes first indication information, or each first URSP includes a correspondence between the first URSP and the first indication information; and
a processing module, configured to determine a target URSP from the at least one first URSP based on the first indication information or the correspondence.

According to a fifth aspect, a URSP determining apparatus is provided. The apparatus includes:
an obtaining module, configured to obtain at least one first URSP, where each first URSP includes first indication information, or each first URSP includes a correspondence between the first URSP and the first indication information; and
a processing module, configured to determine a target URSP from the at least one first URSP based on the first indication information or the correspondence.

According to a sixth aspect, a URSP determining apparatus is provided. The apparatus includes:
a sending module, configured to send URSP association generation information to a first network side device. The URSP association generation information is used for the first network side device to generate a first URSP. The first URSP includes first indication information, or includes a correspondence between the first URSP and the first indication information, and the first indication information is used for indicating a USRP.

According to a sixth aspect, a user equipment is provided. The user equipment includes a processor and a memory. The memory stores a program or instructions executable in the processor. The program or the instructions, when executed by the processor, implement the steps of the method described in the first aspect.

According to an eighth aspect, a user equipment is provided. The user equipment includes a processor and a communication interface. The processor is configured to: obtain at least one first URSP, where each first URSP includes first indication information, or each first URSP includes a correspondence between the first URSP and the first indication information; and determine a target URSP from the at least one first URSP based on the first indication information or the correspondence.

According to a ninth aspect, a first network side device is provided. The network side device includes a processor and a memory. The memory stores a program or instructions executable in the processor. The program or the instructions, when executed by the processor, implement the steps of the method described in the second aspect.

According to a tenth aspect, a first network side device is provided. The first network side device includes a processor and a communication interface. The processor is configured to generate a first URSP. Each first URSP includes first indication information, or each first URSP includes a correspondence between the first URSP and the first indication information, and the first indication information is used for indicating a USRP. The communication interface is configured to send the first URSP to a user equipment.

According to an eleventh aspect, a second network side device is provided. The network side device includes a processor and a memory. The memory stores a program or instructions executable in the processor. The program or the instructions, when executed by the processor, implement the steps of the method described in the third aspect.

According to a twelfth aspect, a first network side device is provided. The second network side device includes a processor and a communication interface. The communication interface is configured to send URSP association generation information to a first network side device. The URSP association generation information is used for the first network side device to generate a first URSP. The first URSP includes first indication information, or includes a correspondence between the first URSP and the first indication information, and the first indication information is used for indicating a USRP.

According to a thirteenth aspect, a communication system is provided. The system includes a user equipment, a first network side device, and a second network side device. The user equipment may be configured to perform the steps of the URSP determining method described in the first aspect, the first network side device may be configured to perform the steps of the URSP determining method described in the second aspect, and the second network side device may be configured to perform the steps of the URSP determining method described in the second aspect.

According to a fourteenth aspect, a readable storage medium is provided. The readable storage medium stores a program or instructions. The program or the instructions, when executed by a processor, implement the steps of the method described in the first aspect, the method described in the second aspect, or the method described in the third aspect.

According to a fifteenth aspect, a chip is provided. The chip includes a processor and a communication interface. The communication interface is coupled to the processor. The processor is configured to execute a program or instructions to implement the method described in the first aspect, the method described in the second aspect, or the method described in the third aspect.

According to a sixteenth aspect, a computer program/program product is provided. The computer program/program product is stored in a storage medium. The computer program/program product is executed by at least one processor, to implement the steps of the URSP determining method described in the first aspect, the second aspect, or the third aspect.

In embodiments of this application, the first URSP includes the first indication information, or each first URSP includes the correspondence between the first URSP and the first indication information. Since the URSP is extended, the user equipment can select the target URSP from one or more URSPs for a current application based on the first indication information included in the first URSP or the correspondence between the target URSP and the first indication information, so that complexity is relatively low, and the application of the user equipment can use the URSP matching the application, so that performance of the user equipment is optimized.

### DETAILED DESCRIPTION

Technical solutions in embodiments of this application are clearly described below with reference to drawings in embodiments of this application. Apparently, the described embodiments are merely some rather than all embodiments of this application. All other embodiments obtained by a person of ordinary skill in the art based on embodiments of this application fall within the protection scope of this application.

Terms "first", "second", and the like in the specification and the claims of this application are used for distinguishing between similar objects, and are not used for describing a specific order or sequence. It should be understood that the terms used in this way may be transposed where appropriate, so that embodiments of this application may be implemented in a sequence other than those illustrated or described herein. In addition, objects defined by "first" and "second" are generally of the same class and do not limit a quantity of objects. For example, one or more first objects may be arranged. In addition, "and/or" in the specification and the claims indicates at least one of connected objects, and a character "/" generally indicates an "or" relationship between associated objects.

It should be noted that, technologies described in embodiments of this application may be applied to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. The terms "system" and "network" in embodiments of this application are usually interchangeably used, and the technology described may be used for both of the systems and radio technologies mentioned above, as well as for another system and radio technology. Anew radio (New Radio, NR) system is described below for an illustrative purpose, and the term NR is used in most of the following descriptions, although the technologies may be applied to applications other than applications of the NR system, such as a 6^{th} Generation (6^{th} Generation, 6G) communication system.

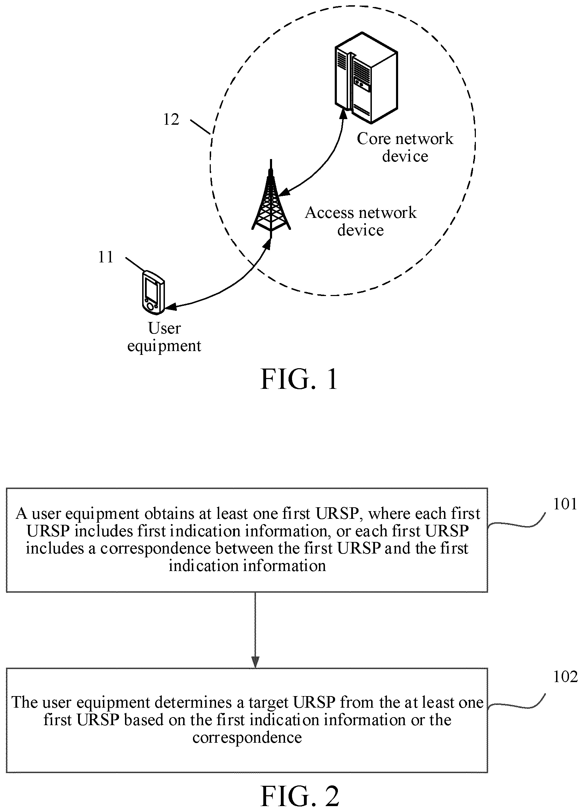

FIG. 1 is a block diagram of a wireless communication system to which embodiments of this application may be applied. The wireless communication system includes a user equipment 11 and a network side device 12. The user equipment 11 may be a user equipment side device such as a mobile phone, a tablet computer (Tablet Personal Computer), a laptop computer (Laptop Computer), which is also referred to as a notebook computer, a personal digital assistant (Personal Digital Assistant, PDA), a palm computer, a netbook, an ultra-mobile personal computer (Ultra-Mobile Personal Computer, UMPC), a mobile internet device (Mobile Internet Device, MID), an augmented reality (augmented reality, AR)/virtual reality (virtual reality, VR) device, a robot, a wearable device (Wearable Device), an on-board device (VUE), a pedestrian user equipment (PUE), smart home (a home device with a wireless communication capability, such as a refrigerator, a television, a washing machine, or furniture), a game console, a personal computer (personal computer, PC), a teller machine, or a selfservice machine. The wearable device includes a smart watch, a smart bracelet, a smart headset, smart glasses, smart jewelry (a smart bracelet, a smart chain bracelet, a smart ring, a smart necklace, a smart ankle bangle, a smart ankle chain, and the like), a smart wristband, smart clothing, and the like. It should be noted that, a specific type of the user equipment 11 is not limited in embodiments of this application. The network side device 12 may include an access network device or a core network device. The access network device 12 may also be referred to as a wireless access network device, a radio access network (Radio Access Network, RAN), a wireless access network function, or a wireless access network unit. The access network device 12 may include a base station, a WLAN access point, a Wi-Fi node, and the like, The base station may be referred to as a NodeB, an evolved NodeB (eNB), an access point, a base transceiver station (Base Transceiver Station, BTS), a radio base station, a radio transceiver, a basic service sets (Basic Service Set, BSS), an extended service set (Extended Service Set, ESS), a household NodeB, a household evolved NodeB, a transmitting receiving point (Transmitting Receiving Point, TRP), or some other appropriate term in the field, as long as the same technical effect is achieved. The base station is not limited to a specific technical term. It should be noted that, in embodiments of this application, only a base station in the NR system is used as an example, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), an network exposure function (Network Exposure Function, NEF), a local NEF (Local NEF, or L-NEF), a binding support function (Binding Support Function, BSF), an application function (Application Function, AF), and the like. It should be noted that, in embodiments of this application, only a core network device in the NR system is used as an example, but the specific type of the core network device is not limited.

The user equipment performs URSP evaluation based on URSP precedences. The HPLMN configures the following URSP list for the user equipment (in descending order of precedences): a URSP#1, a URSP#2, and a URSP#3. For some applications, when the user equipment is in a VPLMN#2, the URSP#1 matches the user equipment according to the above precedences. However, actually, when the user equipment is in the VPLMN#2, the user equipment matches the URSP#2 more. Therefore, different URSPs may actually be used for a same application in different VPLMNs. Therefore, how to determine corresponding URSPs under different VPLMNs is a technical problem that needs to be resolved urgently by a person skilled in the art.

A URSP rule includes two sets of important parameters, namely, traffic descriptor (Traffic Descriptor) parameters that describe attributes of an application APP, including parameters such as an APP ID, a data network name (Data Network Name, DNN), an IP triple, and a connection capability; and route selection descriptors (Route Selection Descriptor) that describe data carrying attributes, including parameters such as single network slice selection assistance information (Single Network Slice Selection Assistance Information, S-NSSAI), a session and service continuity (Session and Service Continuity, SSC) mode, and a DNN. The URSP rule is actually a correspondence between a plurality of sets of traffic descriptors and a plurality of sets of route selection descriptors. After learning traffic descriptor parameters related to an APP, the user equipment may find out a route selection descriptor related to data carrying based on the URSP rule, to know a network slice to which the APP needs to connect.

In embodiments of this application, a field of a URSP is extended so that the URSP includes first indication information, or a correspondence is added to the URSP. The correspondence is a correspondence between the first indication information and the URSP. The first indication information is used for indicating the USRP, and includes, for example, a PLMN identifier ID, a data network name DNN, a slice, a stand-alone non-public network SNPN ID, and an area in which the user equipment is located.

A URSP determining method provided in embodiments of this application is described below in detail through some embodiments and application scenarios thereof with reference to the drawings.

FIG. 2 is a schematic flowchart I of a URSP determining method according to an embodiment of this application. As shown in FIG. 2, the method provided in this embodiment includes the following steps:
Step 101: A user equipment obtains at least one first URSP, where each first URSP includes first indication information, or each first URSP includes a correspondence between the first URSP and the first indication information.

Specifically, the first URSP may be generated by a first network side device and preconfigured or configured for the user equipment. The first network side device may extend the URSP, so that the URSP includes the first indication information, or may establish the correspondence between the URSP and the first indication information.

It should be noted that, that a user equipment obtains at least one first URSP may be understood as that the user equipment obtains at least one piece of first information, and each first information includes a first URSP. The following 3 cases may exist: (1) Each first information includes the first indication information. (2) Each URSP includes the first indication information. (3) Each first URSP includes a correspondence or content indicating the correspondence, and the correspondence is the correspondence between the first URSP and the first indication information. That a user equipment obtains at least one first URSP may alternatively be understood as that the user equipment obtains at least one first URSP. The first URSP satisfies any one of the following 2 cases: (1) The first URSP is an extended URSP, and the first URSP includes the first indication information. In this case, the first indication information may be understood as extended content in the URSP. (2) The first URSP is the extended URSP, and the first URSP includes a correspondence. The correspondence is the correspondence between the first URSP and the first indication information. In this case, the correspondence may be understood as the extended content in the URSP.

The first indication information may include, for example, an identifier of a network and area information, may be associated with a network or an area. During selection of a URSP, the user equipment performs matching with the first indication information in each first URSP based on information such as a network to which the user equipment belongs or an area in which the user equipment is located, to determine a target URSP corresponding to the user equipment.

Step 102: The user equipment determines a target URSP from the at least one first URSP based on the first indication information or the correspondence.

Specifically, when an application layer of the user equipment generates data, during URSP matching, the user equipment may input at least one of the following information for the URSP matching: a PLMN ID, a DNN, and an area in which the user equipment is located. For example, if the application data matches a PLMN ID of a first URSP, the first URSP corresponding to the PLMN ID is used as the target URSP. Alternatively, if the application data matches a correspondence of a first URSP (for example, matching a correspondence between the first URSP and a PLMN ID), the first URSP corresponding to the correspondence is used as the target URSP.

In different PLMNs, an application of the user equipment may use URSPs corresponding to the PLMNs, so that the application matches the URSP more accurately, thereby optimizing performance of the user equipment.

According to the method in this embodiment, the user equipment obtains the at least one first URSP, where each first URSP includes the first indication information, or each first URSP includes the correspondence between the first URSP and the first indication information. Since the URSP is extended, the user equipment can select the target URSP from one or more URSPs for a current application based on the first indication information included in the first URSP or the correspondence between the target URSP and the first indication information, so that complexity is relatively low, and the application of the user equipment can use the URSP matching the application, so that performance of the user equipment is optimized.

Optionally, the first indication information includes at least one of the following information: a public land mobile network PLMN identifier ID, a data network name DNN, a slice, a stand-alone non-public network (Stand-alone Non-Public Network SNPN ID), and an area in which the user equipment is located.

Optionally, the area in which the user equipment is located includes, for example, a tracking area, a local area data network (Local Area Data Network, LADN), or a cell.

Optionally, step 101 may be implemented in at least one of the following manners:

The user equipment receives at least one first URSP transmitted by a first network side device.

The user equipment obtains the at least one first URSP based on preconfigured information in the user equipment.

Specifically, the first network side device may transmit the generated first URSP to the user equipment, and the user equipment receives the first URSP transmitted by the first network side device to obtain the first URSP. Alternatively, the user equipment may preconfigure information of the first URSP, that is, the user equipment may obtain the first URSP based on the preconfigured information.

Optionally, step 102 may be implemented in the following manners:

### Manner 1:

The user equipment performs matching on second information and the first indication information.

In a case of a successful match, the user equipment determines as the target URSP a first URSP corresponding to first indication information for which the successful match exists.

Specifically, a field of the first URSP may be extended so that the first URSP includes the first indication information, as shown in the following Table 1:

**Table 1 URSP rule**

| Information name (Information name) | Description (description) | Category (Category) | Allow a PCF to make modifications in user equipment context | Scope (Scope) |
|---|---|---|---|---|
| Rule precedence (Rule Precedence) | It specifies a URSP rule execution sequence | Mandatory (Mandatory) | Yes | User equipment context |
| Traffic descriptor (Traffic descriptor) | It defines components of the traffic descriptor in the URSP rule | Mandatory | | |
| Application descriptor (Application descriptors) | It includes OSId and OSAppId(s) | Optional | Yes | User equipment context |
| IP descriptor | It is a target IP triple (which includes an IP address or an IPv6 network prefix, a port number, a protocol ID higher than an IP ID) | Optional | Yes | User equipment context |
| Domain descriptor (Domain descriptors) | It is an FQDN or a regular expression used as a domain name matching condition | Optional | Yes | User equipment context |
| Non-IP descriptor | It is a descriptor for destination information of non-IP traffic | Optional | Yes | User equipment context |
| DNN | It matches DNN information provided by an application | Optional | Yes | User equipment context |
| Connection capability (Connection Capabilities) | It matches information provided by an application of a user equipment when requesting a network connection with specific capabilities | Optional | Yes | User equipment context |
| PLMN ID | The URSP is used during matching of the PLMN ID | Optional | Yes | User equipment context |
| SNPN ID | The URSP during matching of the PLMNID | Optional | Yes | User equipment context |
| DN | The URSP is used during matching of the data network | Optional | Yes | User equipment context |
| Area (Area) | The URSP is used during matching of the area | Optional | Yes | User equipment context |

As shown in Table 1, the traffic descriptor of the URSP may be extended, so that the traffic descriptor can carry information such as the PLMN ID, the SNPN ID, the DN, and the area, and can be associated with a specific PLMN, DN, SNPN, area, or the like. During selection of the URSP, the user equipment performs the matching based on the second information, such as a PLMN ID, a DNN, an SNPN ID, or an area, to determine the corresponding target URSP.

### Manner 2:

The user equipment performs matching on second information and the correspondence.

In a case of a successful match, the user equipment determines as the target URSP a first URSP corresponding to a correspondence for which the successful match exists.

Specifically, the correspondence between the first URSP and the first indication information may be established, as shown in the following Table 2:

**Table 2**

| Correspondence between a URSP and first indication information | |
|---|---|
| URSP#1 | PLMN ID# 1/SNPN ID#2 |
| | DN#2 |
| | Area#3 |
| | ... |
| URSP#2 | PLMN ID#2/SNPN ID#3 |
| | DN#1 |
| | Area#2 |
| | ... |

As shown in Table 2, the URSP#1 corresponds to the PLMN ID#1, the NPN ID#2, the DN#2, and the area#3, and the URSP#2 corresponds to the PLMN ID#2, the SNPN ID#3, the DN#1, and the area#2. The user equipment may perform matching on the correspondence based on the second information, for example, the PLMN ID#2 and the DN#1, to determine the corresponding target URSP.

Optionally, the second information includes at least one of the following information: a public land mobile network PLMN identifier ID, a data network name DNN, a slice, a stand-alone non-public network SNPN ID, and an area in which the user equipment is located.

Optionally, that the user equipment obtains the second information includes at least one of the following: The user equipment obtains the second information based on information provided by an application layer.

The user equipment obtains the second information based on a PLMN ID of a current serving PLMN.

The user equipment obtains the second information based on a current position of the user equipment.

The user equipment obtains the second information based on a network name of a data network to which the user equipment needs to connect.

The user equipment obtains the second information based on a network ID of a stand-alone non-public network currently serving the user equipment.

The user equipment obtains the second information based on an identifier of a slice allowed by a current serving network.

Specifically, the information provided by the application layer of the user equipment includes, for example, at least one of the following information: the public land mobile network PLMN identifier ID, the data network name DNN, the slice, the stand-alone non-public network SNPN ID, and the area in which the user equipment is located. The user equipment may obtain the second information based on the information provided by the application layer. Alternatively, the user equipment may obtain the second information based on the PLMN ID, the current position of the user equipment, the network name of the data network to which the user equipment connects, the network ID of the stand-alone non-public network, or the identifier of the slice allowed by the current serving network.

In the above implementation, the first URSP includes the first indication information, or each first URSP includes the correspondence between the first URSP and the first indication information. Since the URSP is extended, the user equipment can select the target URSP from one or more URSPs for a current application based on the first indication information included in the first URSP or the correspondence between the target URSP and the first indication information, so that complexity is relatively low, and the application of the user equipment can use the URSP matching the application in different networks, so that performance of the user equipment is optimized.

Optionally, the first network side device may generate the first URSP based on URSP association generation information provided by a second network side device. The URSP association generation information includes at least one of the following: a correspondence between a second URSP and the first indication information, a correspondence between service description information and the first indication information, a correspondence between a traffic descriptor and the first indication information, a correspondence between a route descriptor and the first indication information, a correspondence between a domain descriptor and the first indication information, a correspondence between a server IP address corresponding to a service and the first indication information, a correspondence between a DNN and the first indication information, or a correspondence between a slice and the first indication information. The second URSP is a URSP provided by the second network side device.

Specifically, in a case the URSP association generation information includes the correspondence between the second URSP and the first indication information, the first URSP may be generated based on the second URSP. For example, a field of the second URSP may be extended, so that the second URSP includes the first indication information, or the correspondence between the second URSP and the first indication information may be included in the second URSP, to obtain a new first URSP.

Alternatively, the first URSP may be generated based on a correspondence between service description information including, for example, an application demand, quality of service (QoS), or quality of experience (Quality of Experience, QoE), and the first indication information. For example, in a PLMN, a DN, a slice, a SNPN, or an area, the first URSP may be generated through the service description information. In other words, the first URSP may include the first indication information, such as the PLMN ID, the DNN, the SNPN ID, or the area, or the first URSP may include the correspondence between the first URSP and the first indication information, such as the PLMN ID, the DNN, the SNPN ID, or the area.

Alternatively, the first URSP may be generated based on the correspondence between the traffic descriptor, the route descriptor, the domain descriptor, the server IP address corresponding to the service, the DNN, or the slice and the first indication information.

For example, the first network side device is a PCF of the network to which the user equipment belongs, that is, an H-PCF.

Optionally, the second network side device includes at least one of the following: an application function AF, a unified data repository (Unified Data Repository, UDR), and a policy control function (Policy Control Function, PCF) of a roaming network in which the user equipment is located.

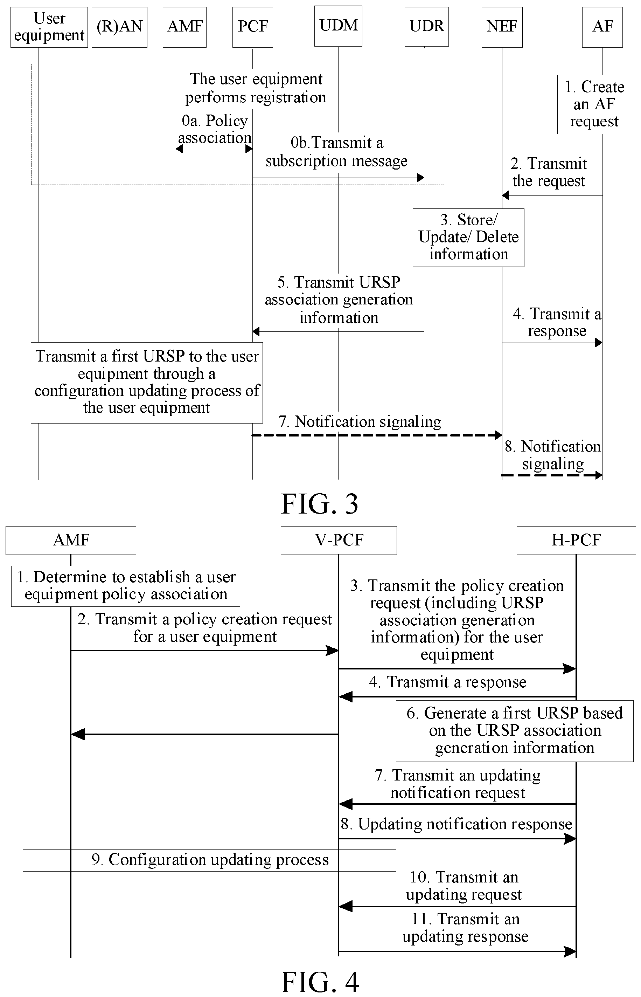

For example, as shown in FIG. 3, when the second network side device is the AF or the UDR, the second network side device provides the URSP association generation information to the PCF, for the PCF to generate the first URSP, and configure the first URSP for the user equipment. The method includes the following steps:
Step 0a: An AMF transmits a policy association request to the PCF.
Step 0b: The PCF transmits a subscription message, for example, Nudr _DM_Subscribe message signaling, to unified data management (Unified Data Management, UDM).
Step 1: Create an AF request.
Step 2: The AF transmits a request to a network exposure function (Network Exposure Function, NEF) to request to generate a first URSP, for example, transmits the request through service parameter generation/updating/deletion request Nnef_ServiceParameter_Create/Update/Delete Request signaling. The request may carry the URSP association generation information.
Step 3: Store/Update/Delete information.
Step 4: The NEF transmits a response to the AF through service parameter generation/updating/deletion response Nnef_ServiceParameter_Create/LTpdate/Delete Response signaling.

Steps 1 to 4 are used for the AF to provide the URSP association generation information or description information of the URSP association generation information to the UDR. The URSP association generation information includes at least one of the following: a correspondence between a second URSP and the first indication information, a correspondence between service description information and the first indication information, a correspondence between a traffic descriptor and the first indication information, a correspondence between a route descriptor and the first indication information, a correspondence between a domain descriptor and the first indication information, a correspondence between a server IP address corresponding to a service and the first indication information, a correspondence between a DNN and the first indication information, or a correspondence between a slice and the first indication information.

Step 5: The UDR transmits the URSP association generation information to the PCF, for example, through Nudr_DM_Notify signaling; and
the PCF generates a first URSP based on the URSP association generation information.

Step 6: The PCF transmits the first URSP to a user equipment through a configuration updating process of the user equipment.

Step 7 and Step 8 are used for the PCF to transmit a reply notification to the NEF and for the NEF to transmit the reply notification to the AF. For example, the reply notifications may be respectively transmitted through session exposure notification Npcf_EventExposure Notify signaling and service parameter notification Nnef_ServiceParameter_Notify signaling.

In an example, as shown in FIG. 4, when the second network device is the PCF, that is, the PCF is a V-PCF during creation of a user equipment policy in a roaming scenario, the method includes the following steps:
Step 1: An AMF determines to establish a user equipment policy association.
Step 2: The AMF transmits a policy creation request for a user equipment to the V-PCF, for example, through user equipment policy control creation request Npcf_UEPolicyControl create Request signaling.

The V-PCF is a PCF of a roaming network in which the user equipment is located.

Step 3: The V-PCF transmits the policy creation request to an H-PCF, where the policy creation request includes URSP association generation information.

Step 4: The H-PCF transmits a response message to the V-PCF.

Step 5: The V-PCF transmits the response message to the AMF.

The response message may be transmitted through user equipment policy control creation response Npcf_UEPolicyControl create Response signaling.

Step 6: The H-PCF generates a first URSP based on the URSP association generation information.

Step 7: The H-PCF transmits an updating notification request to the V-PCF, for example, through user equipment policy control updating notification request Npcf_UEPolicyControl UpdateNotify Request signaling.

Step 8: The V-PCF transmits an updating notification response to the H-PCF, for example, through user equipment policy control updating notification response Npcf_UEPolicyControl UpdateNotify Response signaling.

Step 9: A configuration updating process.

Step 10: The H-PCF transmits an updating request to the V-PCF, for example, through user equipment policy control updating request Npcf_UEPolicyControl Update Request signaling.

Step 11: The V-PCF transmits an updating response to the H-PCF, for example, through user equipment policy control updating response Npcf_UEPolicyControl Update Response signaling.

In steps 7 to 11, the H-PCF transmits the first URSP to the user equipment through the configuration updating process.

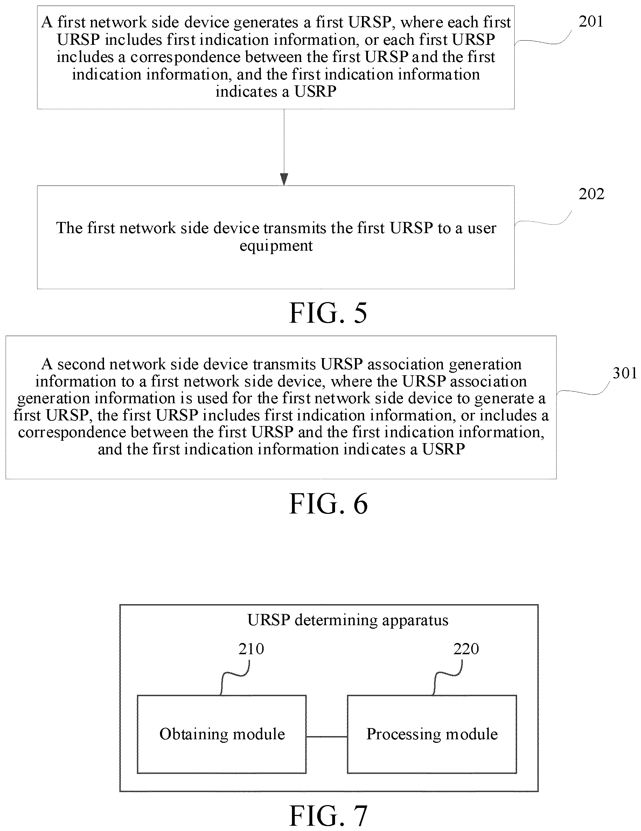

FIG. 5 is a schematic flowchart II of a URSP determining method according to an embodiment of this application. As shown in FIG. 5, the method provided in this embodiment includes the following steps:

Step 201: A first network side device generates a first URSP, where each first URSP includes first indication information, or each first URSP includes a correspondence between the first URSP and the first indication information, and the first indication information is used for indicating a USRP.

Step 202: The first network side device transmits the first URSP to a user equipment.

For the method shown in FIG. 5, refer to the method embodiment of the user equipment side. Details are not described herein.

Optionally, that a first network side device generates a first URSP includes the following steps:

The first network side device receives URSP association generation information transmitted by a second network side device. The URSP association generation information is used for indicating a correspondence between route selection policy-related information and the first indication information.

The first network side device generates the first URSP based on the URSP association generation information.

Optionally, the URSP association generation information includes at least one of the following: a correspondence between a second URSP and the first indication information, a correspondence between service description information and the first indication information, a correspondence between a traffic descriptor and the first indication information, a correspondence between a route descriptor and the first indication information, a correspondence between a domain descriptor and the first indication information, a correspondence between a server IP address corresponding to a service and the first indication information, a correspondence between a DNN and the first indication information, or a correspondence between a slice and the first indication information.

In a case that the URSP association generation information includes the correspondence between the second URSP and the first indication information, the first URSP is generated based on the correspondence between the second URSP and the first indication information.

The first indication information includes at least one of the following information: a public land mobile network PLMN identifier ID, a data network name DNN, a slice, a stand-alone non-public network SNPN ID, and an area in which the user equipment is located.

Optionally, the second network side device includes at least one of the following: an application function AF, a unified data repository UDR, and a user policy control function PCF of a roaming network in which the user equipment is located.

A specific implementation process and technical effects of the method in this embodiment are the same as those in the method embodiment of the user equipment side. For details, refer to the detailed description in the method embodiment of the user equipment side. Details are not described herein.

FIG. 6 is a schematic flowchart II of a URSP determining method according to an embodiment of this application. As shown in FIG. 6, the method provided in this embodiment includes the following steps:
Step 301: A second network side device transmits URSP association generation information to a first network side device, where the URSP association generation information is used for the first network side device to generate a first URSP, the first URSP includes first indication information, or includes a correspondence between the first URSP and the first indication information, and the first indication information is used for indicating a USRP.

Optionally, the first indication information includes at least one of the following information: a public land mobile network PLMN identifier ID, a data network name DNN, a slice, a stand-alone non-public network SNPN ID, and an area in which the user equipment is located.

Optionally, the URSP association generation information is used for indicating a correspondence between route selection policy-related information and the first indication information. The URSP association generation information includes at least one of the following: a correspondence between a second URSP and the first indication information, a correspondence between service description information and the first indication information, a correspondence between a traffic descriptor and the first indication information, a correspondence between a route descriptor and the first indication information, a correspondence between a domain descriptor and the first indication information, a correspondence between a server IP address corresponding to a service and the first indication information, a correspondence between a DNN and the first indication information, or a correspondence between a slice and the first indication information.

In a case that the URSP association generation information includes the correspondence between the second URSP and the first indication information, the first URSP is generated based on the correspondence between the second URSP and the first indication information.

Optionally, the second network side device includes at least one of the following: an application function AF, a unified data repository UDR, and a user policy control function PCF of a roaming network in which the user equipment is located.

A specific implementation process and technical effects of the method in this embodiment are the same as those in the method embodiment of the user equipment side. For details, refer to the detailed description in the method embodiment of the user equipment side. Details are not described herein.

The URSP determining methods provided in embodiments of this application may be performed by a URSP determining apparatus. In embodiments of this application, a URSP determining apparatus provided in embodiments of this application is described by using an example in which the URSP determining apparatus performs the URSP determining method.

FIG. 7 is a schematic structural diagram I of a URSP determining apparatus according to an embodiment of this application. As shown in FIG. 7, the URSP determining apparatus provided in this embodiment includes:
an obtaining module 210, configured to obtain at least one first URSP, where each first URSP includes first indication information, or each first URSP includes a correspondence between the first URSP and the first indication information; and
a processing module 220, configured to determine a target URSP from the at least one first URSP based on the first indication information or the correspondence.

Optionally, the obtaining module 210 is specifically configured to:
receive at least one first URSP transmitted by a first network side device; and/or
obtain the at least one first URSP based on preconfigured information in a user equipment.

Optionally, the first indication information includes at least one of the following information: a public land mobile network PLMN identifier ID, a data network name DNN, a slice, a stand-alone non-public network SNPN ID, and an area in which the user equipment is located.

Optionally, the processing module 220 is specifically configured to:
perform, by the user equipment, matching on second information and the first indication information; and
determine, in a case of a successful match, as the target URSP a first URSP corresponding to first indication information for which the successful match exists.

Optionally, the processing module 220 is specifically configured to:
perform matching on second information and the correspondence; and
determine, in a case of a successful match, as the target URSP a first URSP corresponding to a correspondence for which the successful match exists.

Optionally, the second information includes at least one of the following information: a public land mobile network PLMN identifier ID, a data network name DNN, a slice, a stand-alone non-public network SNPN ID, and an area in which the user equipment is located.

Optionally, the obtaining module 210 is further configured to obtain the second information.

The obtaining the second information includes at least one of the following:
obtaining the second information based on information provided by an application layer;
obtaining the second information based on a PLMN ID of a current serving PLMN;
obtaining the second information based on a current position of the user equipment;
obtaining the second information based on a network name of a data network to which the user equipment needs to connect;
obtaining the second information based on a network ID of a stand-alone non-public network currently serving the user equipment; and
obtaining the second information based on an identifier of a slice allowed by a current serving network.

The apparatus in this embodiment may be configured to perform the method in any of the above method embodiments of the user equipment side, and a specific implementation process and technical effects thereof are the same as those in the method embodiments of the user equipment side. For details, refer to the detailed description in the method embodiments of the user equipment side. The details are not described herein.

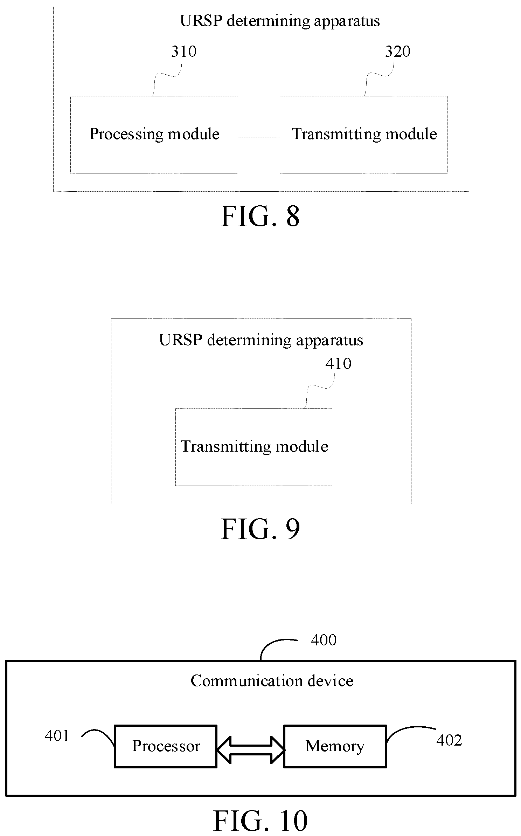

FIG. 8 is a schematic structural diagram II of a URSP determining apparatus according to an embodiment of this application. As shown in FIG. 8, the URSP determining apparatus provided in this embodiment includes:
a processing module 310, configured to generate a first URSP, where each first URSP includes first indication information, or each first URSP includes a correspondence between the first URSP and the first indication information, and the first indication information is used for indicating a USRP; and
a transmitting module 320, configured to transmit the first URSP to a user equipment.

Optionally, the processing module 310 is specifically configured to:
receive URSP association generation information transmitted by a second network side device, where the URSP association generation information includes at least one of the following: a correspondence between a second URSP and the first indication information, a correspondence between service description information and the first indication information, a correspondence between a traffic descriptor and the first indication information, a correspondence between a route descriptor and the first indication information, a correspondence between a domain descriptor and the first indication information, a correspondence between a server IP address corresponding to a service and the first indication information, a correspondence between a DNN and the first indication information, or a correspondence between a slice and the first indication information; and
generate the first URSP based on the URSP association generation information.

Optionally, the first indication information includes at least one of the following information: a public land mobile network PLMN identifier ID, a data network name DNN, a slice, a stand-alone non-public network SNPN ID, and an area in which the user equipment is located.

Optionally, the second network side device includes at least one of the following: an application function AF, a unified data repository UDR, and a user policy control function PCF of a roaming network in which the user equipment is located.

The apparatus in this embodiment may be configured to perform the method in any of the above method embodiments of the first network side device, and a specific implementation process and technical effects thereof are the same as those in the method embodiments of the first network side device. For details, refer to the detailed description in the method embodiments of the first network side device. The details are not described herein.

FIG. 9 is a schematic structural diagram III of a URSP determining apparatus according to an embodiment of this application. As shown in FIG. 9, the URSP determining apparatus provided in this embodiment includes:
a transmitting module 410, configured to transmit URSP association generation information to a first network side device. The URSP association generation information is used for the first network side device to generate a first URSP. The first URSP includes first indication information, or includes a correspondence between the first URSP and the first indication information, and the first indication information is used for indicating a USRP.

Optionally, the first indication information includes at least one of the following information: a public land mobile network PLMN identifier ID, a data network name DNN, a slice, a stand-alone non-public network SNPN ID, and an area in which the user equipment is located.

Optionally, the URSP association generation information is used for indicating a correspondence between route selection policy-related information and the first indication information. The URSP association generation information includes at least one of the following: a correspondence between a second URSP and the first indication information, a correspondence between service description information and the first indication information, a correspondence between a traffic descriptor and the first indication information, a correspondence between a route descriptor and the first indication information, a correspondence between a domain descriptor and the first indication information, a correspondence between a server IP address corresponding to a service and the first indication information, a correspondence between a DNN and the first indication information, or a correspondence between a slice and the first indication information.

In a case that the URSP association generation information includes the correspondence between the second URSP and the first indication information, the first URSP is generated based on the correspondence between the second URSP and the first indication information.

Optionally, the apparatus is applicable to a second network side device. The second network side device includes at least one of the following: an application function AF, a unified data repository UDR, and a user policy control function PCF of a roaming network in which the user equipment is located.

The apparatus in this embodiment may be configured to perform the method in any of the above method embodiments of the second network side device, and a specific implementation process and technical effects thereof are the same as those in the method embodiments of the second network side device. For details, refer to the detailed description in the method embodiments of the second network side device. The details are not described herein.

The URSP determining apparatus in this embodiment of this application may be an electronic device, for example, an electronic device having an operating system, or may be a component in the electronic device, for example, an integrated circuit or a chip. The electronic device may be a user equipment, or may be another device other than the user equipment. In an example, the user equipment may include but is not limited to the above listed types of the user equipment 11, and the another device may be a server, a network attached storage (Network Attached Storage, NAS), or the like. This is not specifically limited in embodiments of this application.

The URSP determining apparatuses provided in embodiments of this application can implement all processes implemented in the method embodiments of FIG. 2 to FIG. 6, and achieve the same technical effects. To avoid repetition, details are not described herein.

Optionally, as shown in FIG. 10, an embodiment of this application further provides a communication device 400. The communication device includes a processor 401 and a memory 402. The memory 402 stores a program or instructions executable in the processor 401. For example, when the communication device 400 is a user equipment, the program or the instructions, when executed by the processor 401, implement the steps of the above embodiments of the URSP determining method, and can achieve the same technical effects. When the communication device 400 is a network side device, the program or the instructions, when executed by the processor 401, implement the steps of the above embodiments of the URSP determining method, and can achieve the same technical effects. To avoid repetition, details are not described herein.

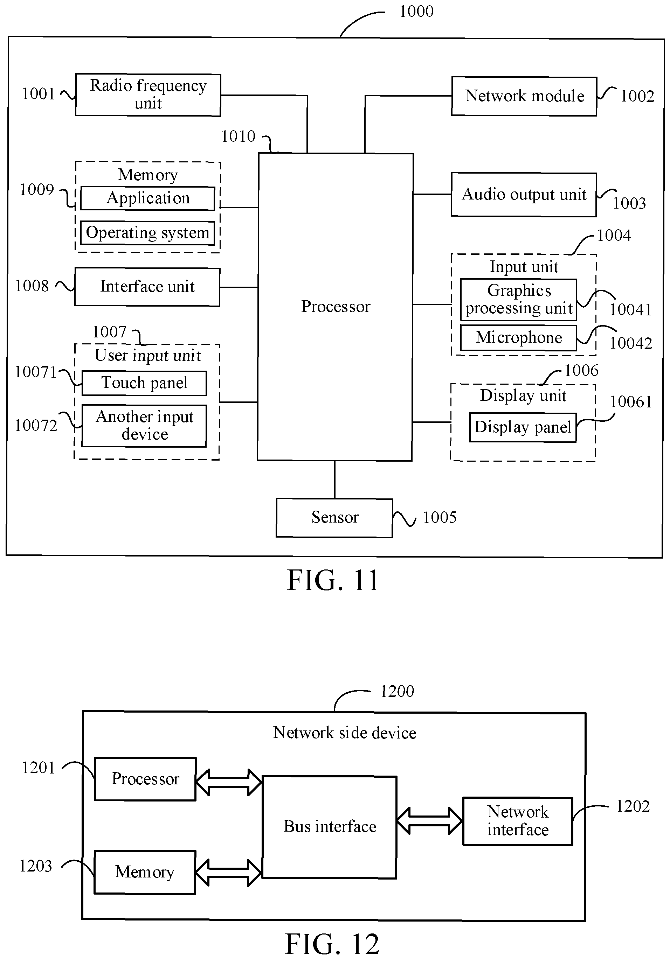

An embodiment of this application further provides a user equipment. The user equipment includes a processor and a communication interface. The processor is configured to: obtain at least one first URSP, where each first URSP includes first indication information, or each first URSP includes a correspondence between the first URSP and the first indication information; and determine a target URSP from the at least one first URSP based on the first indication information or the correspondence. The user equipment embodiment corresponds to the above method embodiment of the user equipment side. The implementation processes and manners of the above method embodiment are all applicable to the user equipment embodiment, and the same technical effects can be achieved. Specifically, FIG. 11 is a schematic diagram of a hardware structure of a user equipment for implementing an embodiment of this application.

The user equipment 1000 includes but is not limited to at least some of components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the user equipment 1000 may further include a power supply (such as a battery) that supplies power to the components. The power supply may be logically connected to the processor 1010 through a power management system, thereby implementing functions such as management of charging, discharging, and power consumption through the power management system. The user equipment structure shown in FIG. 11 constitutes no limitation on the user equipment, and the user equipment may include more or fewer components than those shown in the figure, or some merged components, or different component arrangements. Details are not described herein.

It should be noted that, in this embodiment of this application, the input unit 1004 may include a graphics processing unit (Graphics Processing Unit, GPU) 10041 and a microphone 10042. The graphics processing unit 10041 processes image data of a static picture or a video obtained by an image capturing apparatus (for example, a camera) in a video capturing mode or an image capturing mode. The display unit 1006 may include a display panel 10061. The display panel 10061 may be configured in a form such as a liquid crystal display or an organic light-emitting diode. The user input unit 1007 includes at least one of a touch panel 10071 or another input device 10072. The touch panel 10071 is also referred to as a touch screen. The touch panel 10071 may include a touch detection apparatus and a touch controller. The another input device 10072 may include but is not limited to a physical keyboard, a function button (such as a volume control button and a power button), a trackball, a mouse, and a joystick. Details are not described herein.

In this embodiment of this application, the radio frequency unit 1001 receives downlink data from a network side device, and then may transmit the downlink data to the processor 1010 for processing. In addition, the radio frequency unit 1001 may transmit uplink data to the network side device. Generally, the radio frequency unit 1001 includes but is not limited to an antenna, at least one amplifier, a transceiver, a coupler, a low noise amplifier, and a duplexer.

The memory 1009 may be configured to store a software program or instructions and various data. The memory 1009 may mainly include a first storage area storing a program or instructions and a second storage area storing data. The first program or instruction storage area may store an operating system, an application or an instruction required for at least one function (such as a sound playback function and an image playback function), and the like. In addition, the memory 1009 may include a volatile memory or a non-volatile memory, or the memory 1009 may include both the volatile memory and the non-volatile memory. The memory includes a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM) a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink synchronous dynamic random access memory (Synchlink DRAM, SLDRAM), and a direct rambus dynamic random access memory (Direct Rambus RAM, DRRAM). In this embodiment of this application, the memory 1009 includes but is not limited to the above and any other suitable types of memories, for example, at least one disk storage device, a flash memory device, or another non-volatile solid-state storage device.

The processor 1010 may include one or more processing units. Optionally, an application processor and a modem processor may be integrated into the processor 1010. The application processor mainly processes operations related to an operating system, a user interface, an application, an instruction, and the like. The modem processor mainly processes a wireless communication signal, for example, may be a baseband processor. It may be understood that the modem processor may alternatively not be integrated into the processor 1010.

The processor 1010 is configured to: obtain at least one first URSP, where each first URSP includes first indication information, or each first URSP includes a correspondence between the first URSP and the first indication information; and
determine a target URSP from the at least one first URSP based on the first indication information or the correspondence.

In the above implementation, the first URSP includes the first indication information, or each first URSP includes the correspondence between the first URSP and the first indication information. Since the URSP is extended, the target URSP can be selected from one or more URSPs for a current application based on the first indication information included in the first URSP or the correspondence between the target URSP and the first indication information, so that complexity is relatively low, and the application of the user equipment can use the URSP matching the application, so that performance of the user equipment is optimized.

Optionally, the radio frequency unit 1001 is configured to: receive at least one first URSP transmitted by a first network side device.

The processor 1010 is specifically configured to obtain the at least one first URSP based on preconfigured information in the user equipment.

Optionally, the first indication information includes at least one of the following information: a public land mobile network PLMN identifier ID, a data network name DNN, a slice, a stand-alone non-public network SNPN ID, and an area in which the user equipment is located.

Optionally, the processor 1010 is specifically configured to:
perform, by the user equipment, matching on second information and the first indication information; and
determine, in a case of a successful match, as the target URSP a first URSP corresponding to first indication information for which the successful match exists.

Optionally, the processor 1010 is specifically configured to:
perform matching on second information and the correspondence; and
determine, in a case of a successful match, as the target URSP a first URSP corresponding to a correspondence for which the successful match exists.

Optionally, the second information includes at least one of the following information: a public land mobile network PLMN identifier ID, a data network name DNN, a slice, a stand-alone non-public network SNPN ID, and an area in which the user equipment is located.

Optionally, the processor 1010 is further configured to obtain the second information.

The obtaining the second information includes at least one of the following:
obtaining the second information based on information provided by an application layer;
obtaining the second information based on a PLMN ID of a current serving PLMN;
obtaining the second information based on a current position of the user equipment;
obtaining the second information based on a network name of a data network to which the user equipment needs to connect;
obtaining the second information based on a network ID of a stand-alone non-public network currently serving the user equipment; and
obtaining the second information based on an identifier of a slice allowed by a current serving network.

In the above implementation, the first URSP includes the first indication information, or each first URSP includes the correspondence between the first URSP and the first indication information. Since the URSP is extended, the user equipment can select the target URSP from one or more URSPs for a current application based on the first indication information included in the first URSP or the correspondence between the target URSP and the first indication information, so that complexity is relatively low, and the application of the user equipment can use the URSP matching the application in different networks, so that performance of the user equipment is optimized.

An embodiment of this application further provides a first network side device. The first network side device includes a processor and a communication interface. The processor is configured to obtain at least one first URSP. Each first URSP includes first indication information, or each first URSP includes a correspondence between the first URSP and the first indication information, and the first indication information is used for indicating a USRP. The communication interface is configured to transmit the first URSP to a user equipment. The first network side device embodiment corresponds to the above method embodiment of the first network side device. The implementation processes and manners of the above method embodiment are all applicable to the first network side device embodiment, and the same technical effects can be achieved.

An embodiment of this application further provides a second network side device. The second network side device includes a processor and a communication interface. The communication interface is configured to transmit URSP association generation information to a first network side device. The URSP association generation information is used for the first network side device to generate a first URSP. The first URSP includes first indication information, or includes a correspondence between the first URSP and the first indication information, and the first indication information is used for indicating a USRP. The second network side device embodiment corresponds to the above method embodiment of the second network side device. The implementation processes and manners of the above method embodiment are all applicable to the second network side device embodiment, and the same technical effects can be achieved.

Specifically, an embodiment of this application further provides a network side device. As shown in FIG. 12, a network side device 1200 includes a processor 1201, a network interface 1202, and a memory 1203. The network interface 1202 is, for example, a common public radio interface (common public radio interface, CPRI).

Specifically, the network side device 1200 in this embodiment of this application further includes instructions or a program stored in the memory 1203 and executable in the processor 1201. The processor 1201 calls the instructions or the program in the memory 1203 to perform the method performed by each module shown in FIG. 8 or FIG. 9, and to achieve the same technical effects. To avoid repetition, details are not described herein.

Optionally, the network side device may be a first network side device or a second network side device.

An embodiment of this application further provides a readable storage medium. The readable storage medium stores a program or instructions. The program or the instructions, when executed by a processor, implement the processes of the above embodiments of the URSP determining method, and can achieve the same technical effects. To avoid repetition, details are not described herein.

The processor is a processor in the user equipment described in the above embodiments. The readable storage medium includes a computer-readable storage medium, such as a computer read-only memory ROM, a random access memory RAM, a magnetic disk, or an optical disk.

An embodiment of this application further provides a chip. The chip includes a processor and a communication interface. The communication interface is coupled to the processor. The processor is configured to execute a program or instructions, to implement the processes of the above embodiments of the URSP determining method, and can achieve the same technical effects. To avoid repetition, details are not described herein.

It should be understood that the chip in this embodiment of this application may also be referred to as a system level chip, a system chip, a chip system, a system on chip, or the like.

An embodiment of this application further provides a computer program/program product. The computer program/program product is stored in a storage medium. The computer program/program product is executed by at least one processor to implement the processes of the above embodiments of the URSP determining method, and can achieve the same technical effects. To avoid repetition, details are not described herein.

An embodiment of this application further provides a communication system. The system includes a user equipment, a first network side device, and a second network side device. The user equipment may be configured to perform the steps of the above URSP determining method, the first network side device may be configured to perform the steps of the above URSP determining method, and the second network side device may be configured to perform the steps of the above URSP determining method.

It should be noted that, the term "comprise", "include", or any other variant herein is intended to encompass non-exclusive inclusion, so that a process, a method, an article, or an apparatus including a series of elements not only includes those elements, but also includes another element not listed explicitly, or includes intrinsic elements for the process, the method, the article, or the apparatus. Without any further limitation, an element defined by the phrase "include one ..." does not exclude existence of additional same elements in the process, the method, the article, or the apparatus that includes the element. In addition, it should be noted that the scope of the method and the apparatus in implementations of this application is not limited to function execution in the order shown or discussed, and may further include function execution in a substantially simultaneous manner or in the opposite order based on the functions. For example, the described method may be performed in different order from the described order, and various steps may also be added, omitted, or combined. In addition, features described with reference to some examples may be combined in another example.

According to the descriptions of the above implementations, a person skilled in the art may clearly learn that the method in the above embodiments may be implemented by software using a necessary universal hardware platform, or may be implemented by hardware. However, in many cases, software using a necessary universal hardware platform is a preferred implementation. Based on such an understanding, the technical solutions of this application, in essence, or a part contributing to the prior art may be embodied in a form of a computer software product. The computer software product is stored in a storage medium (such as a ROM/RAM, a magnetic disk, or an optical disk), including a plurality of instructions for causing a user equipment (which may be a mobile phone, a computer, a server, an air conditioner, a network device, or the like) to perform the methods in embodiments of this application.

Although embodiments of this application are described above with reference to the drawings, this application is not limited to the specific implementations described above. The above specific implementations are illustrative but not restrictive. With the enlightenment of this application, a person of ordinary skill in the art may make many forms without departing from the concept of this application and the protection scope of the claims. These forms fall within the protection of this application.

## Claims

1. A user equipment route selection policy URSP determining method, comprising:
obtaining, by a user equipment, at least one first URSP, wherein each first URSP comprises first indication information, or each first URSP comprises a correspondence between the first URSP and the first indication information; and
determining, by the user equipment, a target URSP from the at least one first URSP based on the first indication information or the correspondence.

2. The method according to claim 1, wherein the obtaining, by a user equipment, at least one first URSP comprises at least one of the following:
receiving, by the user equipment, the at least one first URSP transmitted by a first network side device; and
obtaining, by the user equipment, the at least one first URSP based on preconfigured information in the user equipment.

3. The method according to claim 1 or 2, wherein the first indication information comprises at least one of the following information: a public land mobile network PLMN identifier ID, a data network name DNN, a slice, a stand-alone non-public network SNPN ID, and an area in which the user equipment is located.

4. The method according to any one of claims 1 to 3, wherein the determining, by the user equipment, a target URSP corresponding to the user equipment based on the at least one first URSP comprises:
performing, by the user equipment, matching on second information and the first indication information; and
determining, by the user equipment in a case of a successful match, as the target URSP a first URSP corresponding to first indication information for which the successful match exists.

5. The method according to any one of claims 1 to 3, wherein the determining, by the user equipment, a target URSP from the at least one first URSP based on the first indication information or the correspondence comprises:
performing, by the user equipment, matching on second information and the correspondence; and
determining, by the user equipment in a case of a successful match, as the target URSP a first URSP corresponding to a correspondence for which the successful match exists.

6. The method according to claim 4 or 5, wherein the second information comprises at least one of the following information: a public land mobile network PLMN identifier ID, a data network name DNN, a slice, a stand-alone non-public network SNPN ID, and an area in which the user equipment is located.

7. The method according to any one of claims 4 to 6, further comprising:
obtaining, by the user equipment, the second information, wherein
the obtaining, by the user equipment, the second information comprises at least one of the following: obtaining, by the user equipment, the second information based on information provided by an application layer;
obtaining, by the user equipment, the second information based on a PLMN ID of a current serving PLMN;
obtaining, by the user equipment, the second information based on a current position of the user equipment;
obtaining, by the user equipment, the second information based on a network name of a data network to which the user equipment is to access;
obtaining, by the user equipment, the second information based on a network ID of a stand-alone non-public network currently serving the user equipment; and
obtaining, by the user equipment, the second information based on an identifier of a slice allowed by a current serving network.

8. A user equipment route selection policy URSP determining method, comprising:
generating, by a first network side device, a first URSP, wherein each first URSP comprises first indication information, or each first URSP comprises a correspondence between the first URSP and the first indication information, the first indication information indicating a USRP; and
transmitting, by the first network side device, the first URSP to a user equipment.

9. The method according to claim 8, wherein the generating, by a first network side device, a first URSP comprises:
receiving, by the first network side device, URSP association generation information transmitted by a second network side device, the URSP association generation information indicating a correspondence between route selection policy-related information and the first indication information; and
generating, by the first network side device, the first URSP based on the URSP association generation information.

10. The method according to claim 8 or 9, wherein
the URSP association generation information comprises at least one of: a correspondence between a second URSP and the first indication information, a correspondence between service description information and the first indication information, a correspondence between a traffic descriptor and the first indication information, a correspondence between a route descriptor and the first indication information, a correspondence between a domain descriptor and the first indication information, a correspondence between a server IP address corresponding to a service and the first indication information, a correspondence between a DNN and the first indication information, or a correspondence between a slice and the first indication information; and
in a case that the URSP association generation information comprises the correspondence between the second URSP and the first indication information, the first URSP is generated based on the correspondence between the second URSP and the first indication information.

11. The method according to claim 8 or 9, wherein
the first indication information comprises at least one of the following information: a public land mobile network PLMN identifier ID, a data network name DNN, a slice, a stand-alone non-public network SNPN ID, and an area in which the user equipment is located.

12. The method according to claim 9, wherein
the second network side device comprises at least one of the following: an application function AF, a unified data repository UDR, and a policy control function PCF of a roaming network in which the user equipment is located.

13. A URSP determining method, comprising:
transmitting, by a second network side device, URSP association generation information to a first network side device, wherein the URSP association generation information is used for the first network side device to generate a first URSP, and the first URSP comprises first indication information, or comprises a correspondence between the first URSP and the first indication information, the first indication information indicating a USRP.

14. The method according to claim 13, wherein
the first indication information comprises at least one of the following information: a public land mobile network PLMN identifier ID, a data network name DNN, a slice, a stand-alone non-public network SNPN ID, and an area in which a user equipment is located.

15. The method according to claim 13 or 14, wherein
the URSP association generation information comprises at least one of: a correspondence between a second URSP and the first indication information, a correspondence between service description information and the first indication information, a correspondence between a traffic descriptor and the first indication information, a correspondence between a route descriptor and the first indication information, a correspondence between a domain descriptor and the first indication information, a correspondence between a server IP address corresponding to a service and the first indication information, a correspondence between a DNN and the first indication information, or a correspondence between a slice and the first indication information.

16. The method according to claim 13 or 14, wherein
the second network side device comprises at least one of the following: an application function AF, a unified data repository UDR, and a user policy control function PCF of a roaming network in which the user equipment is located.

17. A URSP determining apparatus, comprising:
an obtaining module, configured to obtain at least one first URSP, wherein each first URSP comprises first indication information, or each first URSP comprises a correspondence between the first URSP and the first indication information; and
a processing module, configured to determine a target URSP from the at least one first URSP based on the first indication information or the correspondence.

18. A URSP determining apparatus, comprising:
a processing module, configured to generate a first URSP, wherein each first URSP comprises first indication information, or each first URSP comprises a correspondence between the first URSP and the first indication information, the first indication information indicating a USRP; and
a transmitting module, configured to transmit the first URSP to a user equipment.

19. A URSP determining apparatus, comprising:
a transmitting module, configured to transmit URSP association generation information to a first network side device, wherein the URSP association generation information is used for the first network side device to generate a first URSP, the first URSP comprises first indication information, or comprises a correspondence between the first URSP and the first indication information, the first indication information indicating a USRP.

20. A user equipment, comprising a processor and a memory, wherein the memory stores a program or instructions executable in the processor, and the program or the instructions, when executed by the processor, implement the steps of the URSP determining method according to any one of claims 1 to 7.

21. A first network side device, comprising a memory and a processor, wherein the memory stores a program or instructions executable in the processor, and the program or the instructions, when executed by the processor, implement the steps of the URSP determining method according to any one of claims 8 to 12.

22. A second network side device, comprising a memory and a processor, wherein the memory stores a program or instructions executable in the processor, and the program or the instructions, when executed by the processor, implement the steps of the URSP determining method according to any one of claims 13 to 16.

23. A readable storage medium, storing a program or instructions, wherein the program or the instructions, when executed by a processor, implement the steps of the URSP determining method according to any one of claims 1 to 7, the URSP determining method according to any one of claims 8 to 12, or the URSP determining method according to any one of claims 13 to 16.
